# FASCICULE DE BREVET EUROPEEN

(11) **EP 1 058 837 B1**
(45) Date de publication et mention de la délivrance du brevet: **07.04.2004**
(21) Numéro de dépôt: 97953984.8
(22) Date de dépôt: 31.12.1997
(51) Int. Cl.: G01N 27/22

(54) **CAPTEURS CAPACITIFS DE MESURE D'HUMIDITE ET PROCEDE DE FABRICATION DE TELS CAPTEURS**
KAPAZITIVE SENSOREN ZUR MESSUNG DER FEUCHTIGKEIT UND DEREN VERFAHREN ZUR HERSTELLUNG
CAPACITIVE SENSORS FOR MEASURING HUMIDITY AND METHOD FOR MAKING SAME

(43) Date de publication de la demande: 13.12.2000
(73) Titulaire: Société d'Applications Electroniques pour la Physique, la Science et l'Industrie, 94500 Champigny-sur-Marne (FR)
(72) Inventeur: Desarnaud, Jean, 92170 Vanves (FR)
(74) Mandataire: CAPRI
(86) Numéro de dépôt international: PCT/FR1997/002467
(87) Numéro de publication internationale: WO 1999/035488

(56) Documents cités:
- EP-A- 0 010 771
- EP-A- 0 058 102
- DE-A- 3 203 990
- GB-A- 2 017 924
- US-A- 5 177 662

## Description

L'invention concerne une nouvelle technologie de réalisation de capteurs capacitifs, plus particulièrement destinés à la réalisation de mesures d'humidité relative. On verra que la technologie et des modes de réalisation décrits dans le cadre de la présente invention peuvent s'appliquer à la réalisation de capteurs pouvant être utilisés pour réaliser d'autres mesures.

On connaît plusieurs méthodes de réalisation de capteurs capacitifs et l'utilisation de tels capteurs pour la réalisation de mesures d'humidité.

La technologie utilisée consiste à réaliser deux électrodes planes, électrodes entre lesquelles on place un matériau dont les caractéristiques diélectriques sont modifiées par la présence (ou non) d'humidité dans l'air ambiant. La modification des caractéristiques du diélectrique provoque une variation de la capacité du condensateur ainsi réalisé, si bien que le signal de sortie donne une information sur la teneur en humidité de l'air. Le traitement de ce signal de sortie ne pose pas de problème particulier, il est réalisé par l'exemple à l'aide d'un circuit R-C ou R-L-C.

Selon une technique de l'art antérieur, une des électrodes est réalisée par dépôt d'une couche métallique sur un substrat isolant et l'autre par une fine couche métallique sur le diélectrique. Dans un mode de réalisation couramment utilisé, on procède à une métallisation sous vide ce qui donne une très faible épaisseur de métal. Pour qu'un capteur capacitif fonctionne comme un capteur d'humidité, il est en effet indispensable que l'air humide que l'on cherche à caractériser puisse pénétrer à l'intérieur du condensateur de façon à influencer le diélectrique. On comprend donc qu'il faille réaliser une électrode poreuse particulièrement fine. Si l'on réalise cette électrode en métal, compte tenu de la structure atomique des métaux, la limite entre la continuité électrique et l'étanchéité est atteinte pour des épaisseurs de l'ordre de 1/100 microns, et ceci quel que soit le métal utilisé (en général, chrome, nickel ou or). Outre une relative fragilité du capteur, ce mode de réalisation implique de nombreux inconvénients ; ne particulier, la réalisation d'une connexion fiable entre cette électrode particulièrement fine et le circuit de mesure est extrêmement délicate. Par ailleurs, on constate que les capteurs capacitifs actuellement réalisés nécessitent une succession d'opérations minutieuses et délicates ; on dépose dans un premier temps du métal sur un substrat et ce sur deux zones distinctes, une zone servant de première électrode et l'autre étant utilisée comme contacteur pour la deuxième électrode. L'ensemble est alors recouvert par un film diélectrique, lequel est interrompu au niveau de la zone de contact ménagée pour la deuxième électrode. Enfin, on procède à la mise en lace de la deuxième électrode, c'est-à-dire au dépôt d'un film de métal sur une épaisseur de l'ordre du centième de micron. Bien entendu, il est indispensable d'ajuster la surface utile d'au moins une électrode de façon à obtenir la capacité désirée pour un taux d'humidité donné. Différentes méthodes ont été proposées pour réaliser cette calibration a posteriori ; on citera notamment le brevet français FR-2 687 834 (CORECI) qui prévoit une pluralité de ponts susceptibles d'être déconnectés et le brevet anglais GB-2 213 323 (VAISALA) qui préconise d'ajuster la surface utile d'une électrode en l'isolant par procédé laser à travers le substrat sans modifier le diélectrique. Dans tous les cas, le procédé est le même ; on réalise un capteur capacitif selon le procédé décrit ci-dessus en prenant un maximum de précautions puis on mesure ses performances et l'on procède ensuite aux ajustements indispensables pour obtenir une réponse utilisable.

En tout état de cause, les capteurs capacitifs réalisés selon les procédés décrits ci-dessus, ont tendance à se comporter comme des "éponges", c'est-à-dire que leurs matériaux constitutifs s'imprègnent d'air humide (notamment à l'interface substrat/métal de la première électrode), si bien qu'ils présentent une certaine hystérésis et que leur réponse peut être erronées dans les minutes ou les heures qui suivent une exposition dans une atmosphère saturée d'humidité, voire une immersion dans un liquide.

Le caractère imparfait et insatisfaisant des capteurs capacitifs de mesure d'humidité est donc particulièrement probant : les capteurs sont particulièrement fragiles, leur précision reste de l'ordre de 10 % sur la valeur mesurée, ils ne sont pas interchangeables, ils sont sujets à la saturation et leur procédé de fabrication est à la fois long, délicat et onéreux.

Un autre type de capteur capacitif de mesure d'humidité est décrit dans le document US-5 177 662. Ce capteur comprend deux électrodes poreuses réalisées sous la forme d'une couche polymère poreuse rendue conductrice par inclusion de particules conductives telles que des particules de carbone. La résistance efficace de ces électrodes est cependant de l'ordre de 15 000 Ω.

Le diélectrique utilisé est un film polymère absorbant d'environ 10 µm d'épaisseur, tel que du polyimide ou de l'acide polyparabanique.

Ce capteur présente donc une structure entièrement poreuse.

De plus, le document EP-A-0010771 divulgue un capteur tel que décrit dans le préambule de la revendication 1.

L'invention propose de réaliser des capteurs qui pallient à l'ensemble des inconvénients exposés ci-dessus.

Un objectif de la présence invention est de réaliser un capteur capacitif de mesure d'humidité dont la fabrication est simplifiée, notamment au niveau de l'assemblage des électrodes et du diélectrique et la fixation des contacts de prise d'information.

Un autre objectif de l'invention est de permettre de proposer des capteurs capacitifs particulièrement robustes et fiables et notamment ne subissant pas de dégradation ou de modification de leurs caractéristiques à l'issue de cycles gel-dégel ou après immersion.

Un autre objectif de l'invention est de permettre de réaliser des éléments sensibles souples adaptables à des supports de forme gauche ou courbe.

Un objectif complémentaire de l'invention est de permettre la réalisation d'éléments sensibles indépendants directement connectables sur de circuits de mesure passifs ou actifs.

Un autre objectif de l'invention est de proposer des capteurs présentant des tolérances de fabrication des valeurs de base de l'ordre de 0,25% permettant l'interchangeabilité sans réétalonnage avec une tolérance métrologique de l'ordre de 1%.

Un objectif complémentaire de l'invention et de proposer des capteurs capacitifs qui présentent un maintien de leurs performances et une désaturation instantanée après une phase en saturation (100% Hr) maintenue à long terme.

L'objectif final de l'invention est de prévoir des capteurs d'humidité dont le rapport performances (précision, robustesse, reproductibilité, fiabilité)/prix soit très sensiblement amélioré par rapport à la technologie existante. Ceci devrait permettre d'accéder à des applications en grandes séries telles que l'électroménager, la climatisation, l'automobile ou la péri-informatique tout en conservant une performance métrologique et une fiabilité élevées.

L'ensemble de ces objectifs, ainsi que d'autres qui apparaîtront par la suite sont atteints à l'aide d'un capteur capacitif de mesure d'humidité selon la revendication 1.

On a vu ci-dessus en référence à l'art antérieur que si elles étaient réalisées en métal, ces électrodes devaient satisfaire à deux critères difficilement compatibles entre eux ; d'une part, elles doivent présenter la perte de charge la plus faible possible (porosité) afin de mettre la matière composant le diélectrique (polymère) en équilibre avec le gaz environnant ; d'autre part, elles doivent assurer une continuité électrique. Ces résultats ne sont obtenus qu'en déposant un métal sous vide sur une épaisseur assez importante pour assurer la continuité électrique et suffisamment faible pour éviter que l'électrode ne se comporte comme un film continu interdisant tout échange gazeux, ce qui interdirait l'usage du condensateur en tant que capteur d'humidité. Selon la présente invention, cette contradiction est résolue en ce que l'une des électrodes est constituée par une feuille de métal non poreuse et l'autre par un matériau poreux non métallique disposé en couche épaisse et rendu conducteur par inclusion d'une pluralité de particules conductrices de l'électricité. Le terme poreux est ici employé dans le sans de non totalement étanche à la vapeur d'eau.

L'utilisation d'une électrode sous la forme d'une feuille de métal non poreuse offre plusieurs avantages : tout d'abord, le feuillard métallique qui est un métal massif, sert directement de substrat pour le dépôt du diélectrique, alors que dans l'art antérieur, le métal est déposé sous vide sur un substrat de verre par exemple, ce qui entraîne des hétérogénéités dans le dépôt, aussi bien au niveau de sa nature que de son niveau. En effet, lorsque le métal est déposé, il ne recouvre ni uniformément ni totalement la surface du substrat : il y a donc à des endroits des lacunes métalliques et à d'autres des vaguelettes dues à une surépaisseur de dépôt. Tous ces inconvénients sont éliminés avec l'invention en utilisant un feuillard parfaitement laminé avec un fini poli miroir qui est donc un matériau unique et continu exempt de tout décalage de niveau. En outre, ce feuillard massif fait office de barrière de sorte que la vapeur d'eau reste piégée dans le diélectrique et non dans l'électrode.

De façon préférentielle, le matériau constituant l'électrode poreuse sera choisi parmi les polymères, ce qui permet d'obtenir une absence d'étanchéité, y compris sur une épaisseur relativement importante (préférentiellement de l'ordre de 25 à 100 microns). Ce matériau sera rendu conducteur par dopage, c'est-à-dire par inclusion dans la masse de particules conductrices de l'électricité, par exemple métalliques. Une résistivité d'environ 10 à 50 Ω sera par exemple appropriée. Un résultat identique pourra être obtenue en choisissant un quelconque matériau plastique dans une épaisseur telle qu'il ne soit pas totalement étanche, ledit matériau étant rendu conducteur de l'électricité par tout moyen approprié.

Une autre caractéristique avantageuse des capteurs selon l'invention est qu'ils comportent un diélectrique constitué par un film polymère déposé sous forme d'une pluralité de couches d'épaisseur inegales ; ce procédé permet de mieux maîtriser l'épaisseur finale et la régularité du diélectrique, ce qui a des conséquences fastes sur la précision des condensateurs ainsi réalisés. Cette disposition contribue à l'obtention de condensateurs ayant une sensibilité (Delta sur C) constante et donc facilement interchangeables entre eux. Il doit être noté qu'un tel film polymère diélectrique peut être utilisé et mis en oeuvre avec tous types d'électrodes, y compris celles de l'art antérieur réalisés par dépôt métallique.

Malgré ces précautions. on constate que l'on obtient pas toujours une précision optimile sur la valeur de la capacité pour un taux d'humidité donné. Compte tenu du procédé de fabrication, l'ajustement du condensateur peut être réalisé très facilement et très rapidement : il suffit en effet de réduire la surface utile de l'électrode poreuse jusqu'à obtention de la valeur recherchée ; cette opération peut se faire par simple grattage ou érosion du matériau constituant l'électrode poreuse.

On comprend que l'on obtient selon ce mode de fabrication des capteurs d'un prix de revient industriel particulièrement faible. Outre leurs qualités de précision et de reproductibilité, ces condensateurs se révéleront particulièrement solides et pourront résister sans dommages à d'importantes et différentes contraintes mécaniques et/ou thermiques. Ils présenteront une grande souplesse, ce qui permettra de les utiliser sur des surfaces autres que planes. Enfin, la prise d'informations se fera très simplement, préférentiellement par contacts directs sur l'une et l'autre des deux électrodes. Ceci permet de proposer des condensateurs souples, destinés à être placés par simple clipsage sur des circuits ou dans des ensembles existants. Incidemment, on remarquera que ce mode de prise d'informations était irréalisable avec les condensateurs réalisés selon l'art antérieur, la faible épaisseur et la fragilité de l'électrode métallique poreuse interdisant toute mise en place d'une liaison filaire sur ladite électrode.

Au-delà des condensateurs à usage de capteurs d'humidité, la présente invention porte sur le procédé de fabrication de ces capteurs. Ce procédé porte, pour le mode de réalisation préférentiel sur l'empilement successif d'une feuille métallique en tant que substrat de basé, d'un film polymère diélectrique poreux et d'une couche de polymère poreux dopé. Les condensateurs élémentaire sont donc obtenus par découpage des empilements ci-dessus décrits. Il est possible d'ajuster la valeur de la capacité en jouant sur la surface utile de l'une au moins des électrodes Enfin, la prise d'informations peut être réalisée par simple contacts sur les faces externes des électrodes, si bien que les condensateurs selon l'invention n'ont pas besoin d'être munis de câbles de liaison.

D'autres avantages et caractéristiques de l'invention apparaîtront à la lecture suivante d'un mode de réalisation préférentiel de l'invention et d'une variante, donnés à simple titre indicatif, et des dessins annexés dans lesquels :
- la figure 1 représente une vue en coupe d'un capteur capacitif selon l'invention, selon le mode de réalisation préférentiel, et
- la figure 2 représente une vue en coupe d'un capteur capacitif selon une variante à deux électrodes poreuses.

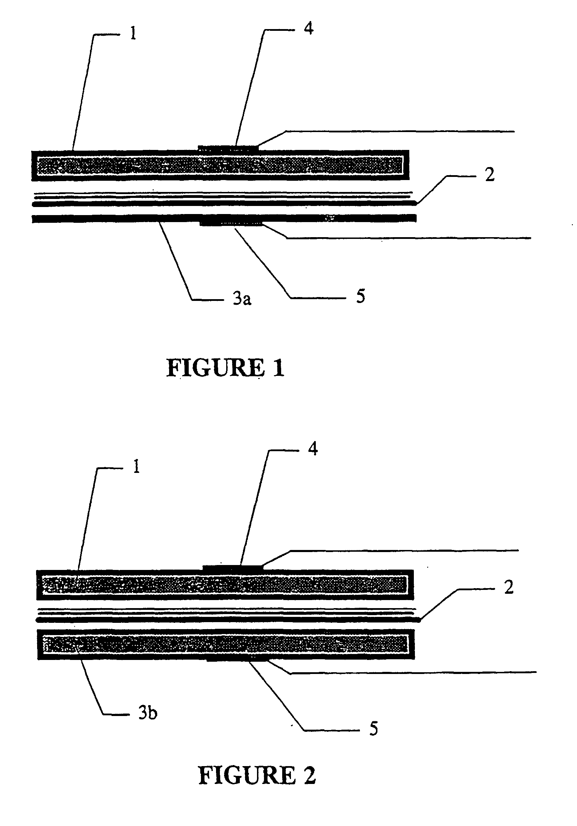

On constate sur la figure 1 que les condensateurs selon l'invention sont réalisés par empilement d'une feuille de métal utilisée comme première électrode 3a, d'un film polymère 2 de faible épaisseur (environ 2 microns), ledit film étant préférentiellement réalisé par empilements de films d'épaisseurs inégales, et d'une deuxième électrode 1 réalisée en matériau autre que métallique (exemple, polymère) dopé, ladite deuxième électrode présentant une épaisseur d'environ 100 microns et une résistance efficace de l'ordre de 10 à 50 Q. Les contacts de prises d'informations 4 et 5 sont réalisés directement respectivement sur les électrodes 1 et 3a.

Dans le procédé de fabrication, la feuille de métal sert directement de substrat de base pour le dépôt du diélectrique 2 et de l'électrode poreuse 1. Dans le cadre d'une fabrication en séries industrielles, cette feuille sera choisie de grandes dimensions, et le complexe ainsi réalisé sera découpé aux dimensions exactes des condensateurs.

Dans une forme de réalisation non inventive représentée sur la figure 2, on pourra choisir de réaliser des condensateurs munis par exemple de deux électrodes poreuses, séparées par un film polymère diélectrique multicouche réalisé par dépôt de couches d'épaisseurs différentes. On réalisera donc l'empilement suivant :
- une couche de polymère rendu condensateur de l'électricité par dopage.
- un film de polymère multicouche
- une couche de polymère rendu conducteur de l'électricité par dopage.

Là encore la prise d'information se fera par contacts directs sur les deux électrodes poreuses. de tels condensateurs constitueront des capteurs d'humidité particulièrement performants ; en particulier, ils seront en osmose pratiquement totale avec le milieu, d'où une sensibilité encore améliorées et des temps de réponse particulièrement courts.

Bien entendu, la description ci-dessus est donnée à simple titre indicatif et l'on pourra choisir d'autres modes de réalisation des condensateurs et notamment différentes dimensions, sans pour autant sortir du cadre de la présente invention.

## Revendications

1. Capteur capacitif de mesure d'humidité comportant deux électrodes (1, 3a) séparées par un matériau diélectrique (2), une des électrodes (3a) est réalisée au moyen d'une feuille de métal non-poreuse, et l'autre électrode (1) est en contact direct du matériau diélectrique (2), **caractérisé en ce que** l'autre électrode (1) est constituée par un matériau poreux autre que métallique disposé en couche épaisse et rendu conducteur par inclusion d'une pluralité de particules conductrices de l'électricité.

2. Capteur capacitif selon la revendication 1, **caractérisé en ce que** le matériau poreux constituant l'électrode (1) est choisi parmi les polymères.

3. Capteur capacitif selon la revendication 1, **caractérisé en ce que** le matériau poreux constituant l'électrode est un matériau plastique présentant une épaisseur telle qu'il ne soit pas totalement étanche.

4. Capteur capacitif selon la revendication 1, **caractérisé en ce que** l'électrode poreuse (1) présente une épaisseur de l'ordre de 25 à 100 microns.

5. Capteur capacitif selon l'une quelconque des revendications 1 à 4, dans lequel l'électrode poreuse (1) présente une résistance efficace de l'ordre de 10 à 50 Ω.

6. Capteur capacitif selon l'une quelconque des revendications précédentes, dans lequel ledit matériau diélectrique (2) se présente sous la forme d'un film polymère comprenant une pluralité de couches d'épaisseurs inégales empilées.

7. Capteur capacitif selon la revendication 1, **caractérisé en ce que** la prise d'informations est réalisée par contacts directs (4 et 5) sur l'une et l'autre des deux électrodes (1 et 3a).

8. Procédé de fabrication d'un capteur capacitif selon l'une quelconque des revendications précédentes, **caractérisé en ce que** le procédé consiste à réaliser un empilement successif d'une feuille de métal (3a), d'un fil polymère multicouche (2) isolant et d'une couche de polymère dopé (1).

9. Procédé de fabrication d'un capteur capacitif selon la revendication S, dans lequel il est ajusté à la valeur recherchée pour un condensateur particulier par réduction de la surface utile de l'électrode poreuse (1), ladite étape de réduction étant avantageusement réalisée par simple grattage ou érosion du matériau constituant l'électrode poreuse (1).

## Patentansprüche

1. Kapazitiver Sensor zur Feuchtigkeitsmessung, aufweisend zwei Elektroden (1, 3a), die durch ein dielektrisches Material (2) getrennt sind, wobei eine der Elektroden (3a) mittels eines nicht-porösen Metallblechs verwirklicht ist, und wobei die andere Elektrode (1) sich in direktem Kontakt mit dem dielektrischen Material (2) befindet, **dadurch gekennzeichnet, dass** die andere Elektrode (1) durch ein anderes poröses Material als Metallmaterial gebildet ist, das als dicke Schicht angeordnet und durch Einschluss von mehreren elektrisch-leitenden Partikeln elektrisch-leitend gemacht ist.

2. Kapazitiver Sensor nach Anspruch 1, **dadurch gekennzeichnet, dass** das die Elektrode (1) bildende poröse Material aus Polymeren ausgewählt ist.

3. Kapazitiver Sensor nach Anspruch 1, **dadurch gekennzeichnet, dass** das die Elektrode bildende poröse Material ein Kunststoffmaterial ist, das eine Dicke derart aufweist, dass es nicht vollständig dicht ist.

4. Kapazitiver Sensor nach Anspruch 1, **dadurch gekennzeichnet, dass** die poröse Elektrode (1) eine Dicke in der Größenordnung von 25 bis 100 µm aufweist.

5. Kapazitiver Sensor nach einem der Ansprüche 1 bis 4, **dadurch gekennzeichnet, dass** die poröse Elektrode (1) einen wirksamen Widerstand in der Größenordnung von 10 bis 50 Ω aufweist.

6. Kapazitiver Sensor nach einem der vorangehenden Ansprüche, wobei das dielektrische Material (2) die Form eines Polymerfilms aufweist, der mehrere übereinander liegende Schichten ungleicher Dicken aufweist.

7. Kapazitiver Sensor nach Anspruch 1, **dadurch gekennzeichnet, dass** der Informationsabgriff durch direkte Kontakte (4 und 5) auf der einen und der anderen der beiden Elektroden (1 und 3a) gebildet ist.

8. Verfahren zur Herstellung eines kapazitiven Sensors nach einem der vorangehenden Ansprüche, **dadurch gekennzeichnet, dass** das Verfahren eine Übereinanderschichtung aus einem Metallblech (3a), einer isolierenden Polymer-Mehrschichtfaser (2) und einer dotierten Polymerschicht (1) vorsieht.

9. Verfahren zur Herstellung eines kapazitiven Sensors nach Anspruch 8, wobei der Sensor durch Reduzieren der Nutzfläche der porösen Elektrode (1) auf einen Sollwert für einen speziellen Kondensator eingestellt wird, wobei das Reduktionsverfahren vorteilhafterweise durch einfaches Schaben oder Erudieren eines die poröse Elektrode (1) bildenden Materials verwirklicht wird.

## Claims

1. A capacitive sensor for measuring humidity including two electrodes (1, 3a) separated by a dielectric material (2), one of the electrodes (3a) is produced by means of a non-porous metal foil and the other electrode (1) is in direct contact with the dielectric material, **characterized in that** the other electrode (1) is formed by a porous, any but metal, material positioned in a thick layer and made conductive by inclusion of a plurality of electrically conductive particles.

2. A capacitive sensor according to claim 1, **characterized in that** the porous material forming the electrode (1) is selected from polymers.

3. A capacitive sensor according to claim 1, **characterized in that** the porous material forming the electrode is a plastic material exhibiting a thickness so as not to be totally impervious.

4. A capacitive sensor according to claim 1, **characterized in that** the porous electrode (1) exhibits a thickness of the order of 25 to 100 microns.

5. A capacitive sensor according to any of claims 1 to 4, wherein the porous electrode (1) exhibits an effective resistance of the order of 10 to 50 Ω.

6. A capacitive sensor according to any of the above claims, wherein said dielectric material (2) is provided in the form of a polymer film comprising a plurality of stacked layers of uneven thicknesses.

7. A capacitive sensor according to claim 1, **characterized in that** information tapping is achieved by direct contacts (4 and 5) on both of the two electrodes (1 and 3a).

8. A method for manufacturing a capacitive sensor according to any of the above claims, **characterized in that** the method consists in producing a successive stacking of a metal foil (3a), of an insulating multilayer polymer film (2) and of a doped polymer layer (1).

9. A method for manufacturing a capacitive sensor according to claim 8, wherein the desired value for a particular condenser is adjusted by reducing the useful surface of the porous electrode (1), wherein said reduction step is advantageously achieved by simple scraping or erosion of the material forming the porous electrode (1).
